(19) Europäisches Patentamt
European Patent Office
Office européen des brevets

(11) **EP 2 143 911 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
*F02C 7/232* *(2006.01)* *F02C 9/26* *(2006.01)*

(21) Anmeldenummer: **09164127.4**

(22) Anmeldetag: **30.06.2009**

(54) **Brennstoffzufuhrsystem für ein Gasturbinentriebwerk**

Fuel supply system for a gas turbine engine

Système d'alimentation de combustible d'une turbine à gaz

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **11.07.2008 DE 102008032565**

(43) Veröffentlichungstag der Anmeldung:
**13.01.2010 Patentblatt 2010/02**

(73) Patentinhaber: **Rolls-Royce Deutschland Ltd & Co KG**
**15827 Dahlewitz (DE)**

(72) Erfinder:
• **Lück, Rudolf**
**14558, Nuthetal (DE)**
• **Giugno, Dominik**
**10119, Berlin (DE)**
• **Otterbach, Christian**
**15834 Rangsdorf (DE)**

(56) Entgegenhaltungen:
**EP-A1- 1 524 423**   **US-A- 5 365 732**
**US-A1- 2005 097 895**   **US-A1- 2005 198 964**
**US-A1- 2008 016 875**

## Beschreibung

Die Erfindung betrifft ein Brennstoffzufuhrsystem für ein Gasturbinentriebwerk mit einer Hochdruckzufuhrleitung, einer Brennstoffdosiereinheit und einem mit den Brennern verbundenen Brennstoffverteilersystem zur Regelung der den einzelnen Brennern zugeführten Brennstoffmenge.

Es sind beispielsweise aus der US 7137242 B2 Mehrleitungsbrennstoffzufuhrsysteme bekannt, die eine im kalten Bereich des Triebwerks angeordnete Hochdruckzufuhrleitung mit einer Breunstoffdosiereinheit und einer Brennstoffstufungseinheit umfassen. Die Stufungseinheit teilt den dosierten Brennstoffstrom auf mindestens eine Hauptbrennerleitung und auf eine Pilotbrennerleitung auf, die im heißen Bereich des Triebwerks liegen und an die Hauptdüsen bzw. Pilotdüsen der einzelnen Brenner angeschlossen sind.

Die US 6813876 B2 beschreibt ein Brennstoffzufuhrsystem für ein Gasturbinentriebwerk mit einer Hauptbrenner-Brennstoffversorgungsleitung und einer Pilotbrenner-Brennstoffversorgungsleitung. Eine Hochdruckpumpe liefert den Brennstoff zu den Haupt- und Pilotbrennerversorgungsleitungen. Ein Drosselventil regelt, den Brennstofffluss in der Hauptbrenner-versorgungsleitungr während ein Dosierventil den Brennstofffluss in der Pilotbrenner-Versorgungsleitung regelt,

Die hier vorgesehene Anordnung zweiteiliger Brennstoffleitungssysteme mit den Pilot- und den Hauptdüsen der einzelnen Brenner separat zugeordneten Versorgungsleitungen oder auch die Ausbildung mehrerer mit Stellventilen versehener Versorgungsleitungen für die Hauptbrenner zur variablen Versorgung der Brenner mit Brennstoff ist insofern nachteilig, als beim Ausschalten bestimmter Brennergruppen Brennstoff in den vorübergehend stillgelegten, im heißen Bereich des Triebwerks befindlichen Leitungen steht und dadurch Teile des Brennstoffsystems aufgrund einer Karbonisierung des Brennstoffs blockiert werden können, so dass eine exakte, mit den herkömmlichen - beispielsweise mechanischen oder pneumatischen - Ventilantrieben ohnehin schwierige Regelung der Brennstoff zufuhr zu den einzelnen Brennern oder Brennergruppen und eine kontinuierliche, schadstoffarme Verbrennung nicht gewährleistet ist, sofern keine weiteren Maßnahmen zur Kühlung des stehenden Brennstoffes im heißen Bereich getroffen werden, die wiederum mit Nachteilen wie erhöhtem Gewicht verbunden wären.

Ein aus der US 7036302 B2 bekanntes mehrstufiges Brennstoffversorgungssystem für ein Gasturbinentriebwerk umfasst eine Mehrzahl von Brennern und mindestens erste und zweite Brennstoffeinspritzkreise in federn Brenner, sowie erste und zweite Brennstoffdüsenventile in jedem Brenner, die mit den Brennstoffeinspritzkreisen des jeweiligen Brenners steuerbar verbunden sind. Allen Brennern wird durch eine einzige Brennstoffversorgungsleitung der zu verbrennende Brennstoff zugeführt, wobei die Steuerung der Ventile über eine Signal-Brennstoffleitung hydraulisch durch einen Differenzdruck zu dem Brennstoffdruck in der Brennstoffversorgungsleitung erfolgt. Das beschriebene System ist aufwendig und zudem insofern nachteilig, als die Erhitzung des Brennstoffs in dem Signalkreis mit den oben geschilderten Problemen verbunden ist. Die Brennstoffzufuhr über Stufungsventile, die zusätzlich auch detailliert in der US 7007476 B2 beschrieben werden, ist zudem apparativ aufwendig und in der Stufungsfunktionalität eingeschränkt.

Der Erfindung liegt die Aufgabe zugrunde, ein einfach ausgebildetes Brennstoffzufuhrsystem für ein Gasturbinentriebwerk anzuheben, das eine exakte variable Brennstoffverteilung bzw. -dosierung auf die einzelnen gestuften bzw. ungestuften Brenner und damit eine stabile, schadstoffarme Verbrennung bei geringem Gewicht und kleiner Baugröße der Ventile gewährleistet und zudem wartungsarm ist und eine lange Lebensdauer aufweist.

Erfindungsgemäß wird die Aufgabe mit einem Brennstoffzufuhrsystem gemäß den Merkmalen des Patentanspruchs 1 gelöst. Weitere Merkmale und vorteilhafte Ausgestaltungen der Erfindung sind Gegenstand der Unteransprüche.

Der Grundgedanke der Erfindung besteht in einem, der Vielzahl von Brennern zugeordneten Brennstoffverteilersystem, das in dem heißen Triebwerksbereich nur eine einzige Brennstoffleitung (Einzelbrennstoffleitung) sowie eine jedem Brenner zugeordnete, aus mehreren unabhängig voneinander, einzeln oder gleichzeitig elektrisch in eine geschlossene oder offene Endlage Verstellbaren Sperrventilen (Pilot- und/oder Hauptventilen) bestehende Ventileinrichtung umfasst. Die Sperrventile haben einen bestimmten (konstanten), aber von Ventil zu Ventil unterschiedlichen Querschnitt, so dass entsprechend dem Ein-/Aus-Schaltzustand der Sperrventile der Ventileinrichtung eine bestimmte - variable Brennstoffverteilung auf die einzelnen Brenner sowie zwischen den Stufen (Pilot- und Haupteinspritzdüse) ein und desselben Brenners erfolgen kann. Die so ausgebildete - elektrisch betätigte - Ventilkombination (Zwei- oder Mehrzustandsventil) ist verschleiß- und wartungsarm und gewährleistet eine stabile, an die jeweiligen Betriebs- und Flugbedingungen angepasste Verbrennung ohne Verkokungserscheinungen im Brennstoffverteilersystem und bei langer Lebensdauer der Bauteile des Verteilersystems.

In Ausgestaltung der Erfindung sind die elektrisch betätigten Sperrventile, die zur Kühlung von dem Brennstoff umspült werden können, jeweils an eine einzelne Signalleitung angeschlossen, um unabhängig voneinander verstellt werden zu können. Sie sind jedoch an eine gemeinsame Rückleitung angeschlossen, die auch als alternative Signalleitung genutzt werden kann, so dass der Installationsaufwand gering ist und auch das Gewicht gering gehalten werden kann.

In Ausgestaltung der Erfindung können die zur Brennstoffverteilung und/oder -dosierung vorgesehenen Ventileinrichtungen auch unabhängig voneinander oder in Gruppen angesteuert werden, wobei Funktionsgruppen von Ventilen gemeinsame Signal- oder Rückleitungen nutzen können.

Weiterhin umfasst die Ventileinrichtung eine für gestufte Brenner ausgebildete Stufungsventileinrichtung, die mindestens ein Pilotventil oder Hauptventil einschließt. Entsprechend der jeweiligen Schaltstellung (auf oder zu) der Pilot- und Hauptventile kann der Brennstoffstrom zwischen der Pilot- und Haupteinspritzdüse des gestuften Brenners aufgeteilt werden. Das Pilotventil kann dabei so ausgebildet sein, dass es einen größeren Querschnitt freigibt oder verschließt und in geschlossenem Zustand dennoch einen kleineren Querschnitt freilässt.

In weiterer Ausgestaltung der Erfindung ist die Ventileinrichtung als Binärverteilungseinrichtung ausgebildet und umfasst zur Brennstoffverteilung auf einen gestuften Brenner mindestens zwei Pilotventile und/oder mindestens zwei Hauptventile, die im Querschnitt so dimensioniert sind, dass jedes Ventil doppelt so groß wie das vorhergehende ist. Bei n Pilot- bzw. n Hauptventilen ergibt sich der Querschnitt des n-ten Pilot- bzw. Hauptventils aus $A_n = 2^n \cdot A_0$, wobei $A_0$ der jeweils kleinste Querschnitt $A_{min}$ ist. Bei einer ausreichend großen Anzahl von derart binär codierten Pilot- und Hauptventilen kann die Binärverteilungsventileinrichtung gleichzeitig als Brennstoffdosierventileiiitiehtung für die jeweiligen gestuften Brenner fungieren, so dass die Brennstoffdosiereinheit in der Hochdruckzufuhrleitung wegfallen kann und somit Kosten und Gewicht des Brennstoffzufuhrsystems verringert werden.

In weiterer Ausgestaltung der Erfindung werden nicht gestufte Brenner mit einer Binärdosierventileinrichtung, bestehend aus einer vielzahl von Sperrventilen mit binär codierter Querschnittsgröße ausgebildet.

In weiterer Ausgestaltung der Erfindung haben einzelne oder alle Sperrventile mit nicht binär codierten Querschnittsgrößen zwei definierte Endlagen und eine Mittellage, wodurch die Anzahl der benötigten Ventile verringert werden kann, was beispielsweise durch die Verwendung eines Magnets, als Anker in einer Spule erreicht werden kann.

In weiterer Ausgestaltung der Erfindung sind einzelne oder alle Sperrventile so ausgebildet, dass im stromlosen Fall (Fehlerfall) entweder die letzte Ventilstellung beibehalten wird, oder das Ventil eine definierte Stellung einnimmt.

Ausführungsbeispiele der Erfindung werden anhand der Zeichnung näher erläutert. Es zeigen:

Fig. 1     ein Brennstoffzufuhrsystem für ein Gasturbinentriebwerk, das eine Brennstoffdosiereinheit und an eine Einzelbrennstoffleitung angeschlossenejeweils eine Haupteinspritzdüse und eine Piloteinspritzdüse umfassende - gestufte Brenner mit Stufungsventileinrichtung umfasst;

Fig. 2     eine schematische Detaildarstellung der einem gestuften Brenner vorgeschalteten Stufungsventileinrichtung nach Fig. 1 zur variablen Einstellung der Brennstoffzufuhr;

Fig. 3     eine Darstellung der verschiedenen Schaltzustände der Stufungsventileinrichtung nach Fig. 2 zur variablen Brennstoffzufuhr zur Pilot- und zur Haupteinspritzdüse;

Fig. 4     ein Brennetoffzufuhrsystem mit an eine Einzelbrennstoffleitung angeschlossenen gestuften Brennern und diesen jeweils zugeordneter Binärverteilungsventilainrichtung, die als Brennstoffdosierventileinrichtung fungiert;

Fig. 5     eine detaillierte Darstellung der einem gestuften Brenner vorgeschalteten - gestuften - Binärverteilungsventileinrichtung; und

Fig. 6     eine detaillierte schematische Darstellung einer einem ungestuften Brenner zugeordneten Binärdosierventileinrichtung.

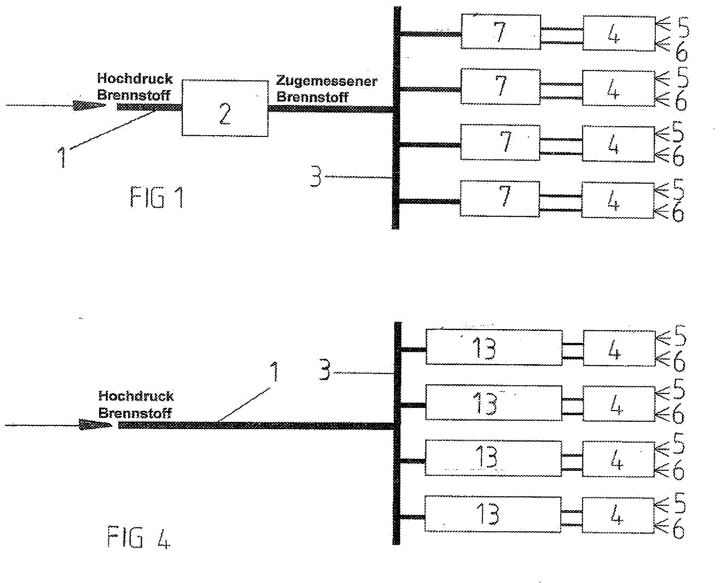

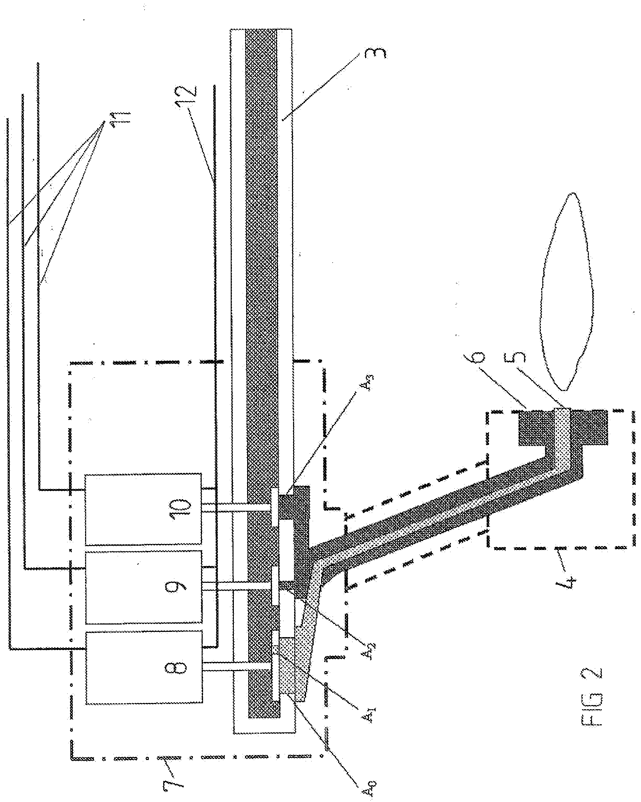

Das in Fig. 1 dargestellte Brennstoffzufuhrsystem umfasst eine Hochdruckzufuhrleitung 1, in die eine Brennstoffdosiereinheit 2 eingebunden ist und die in eine im heißen Triebswerksbereich liegende Einzelbrennstoffleitung 3 mündet. An die Einzelbrennstoffleitung 3 ist eine Vielzahl von gestuften Brennern 4 angeschlossen, die jeweils eine Piloteinspritzdüse 5 und eine Haupteinspritzdüse 6 einschließen. Jedem derart gestuft ausgebildeten Brenner 4 ist eine mit dem von der Brennstoffdosiereinheit 2 über die Einzelbrennstoffleitung 3 zugeführten Brennstoff beaufschlagte Stufungsventileinrichtung 7 zugeordnete die zur Kühlung von dem Brennstoff umspült wird und die, wie Fig. 2 zeigt, von einem Pilotventil 8 sowie einem ersten und einem zweiten Hauptventil 9 und 10 gebildet werden kann. Das Pilotventil 8 und die Hauptventile 9, 10 der Stufungsventileinrichtung 7 können über voneinander isolierte Signalleitungen 11 und eine gemeinsame Rückleitung 12 - vorzugsweise elektromagnetisch oder piezoelektrisch - in eine obere und eine untere Endlage, das heißt in eine Offenstellung und eine Schließstellung verstellt werden. In der in Fig. 2 dargestellten unteren Endlage des Pilotventils 8 wird nur ein kleiner Brennstoffströmungsquerschnitt $A_1$ zur Piloteinspritzdüse 5 freigegeben, während in dessen oberer Endlage über den deutlich größeren Brennstoffströmungsquerschnitt $A_0$ eine große Brennstoffmenge zur Piloteinspritzdüse 5 gelangt. Den ersten und zweiten Hauptventilen 9 und 10 der Stufungsventileinriehtung 7, die in der oberen Endlage eine Offenstellung und in der unteren Endlage eine - in Fig. 2 gezeigte - Schließstellung definieren, sind zwei unterschiedlich große Brennstoffströmungsguerschnitte $A_2$ (klein) und $A_3$ (groß) zugeordnet.

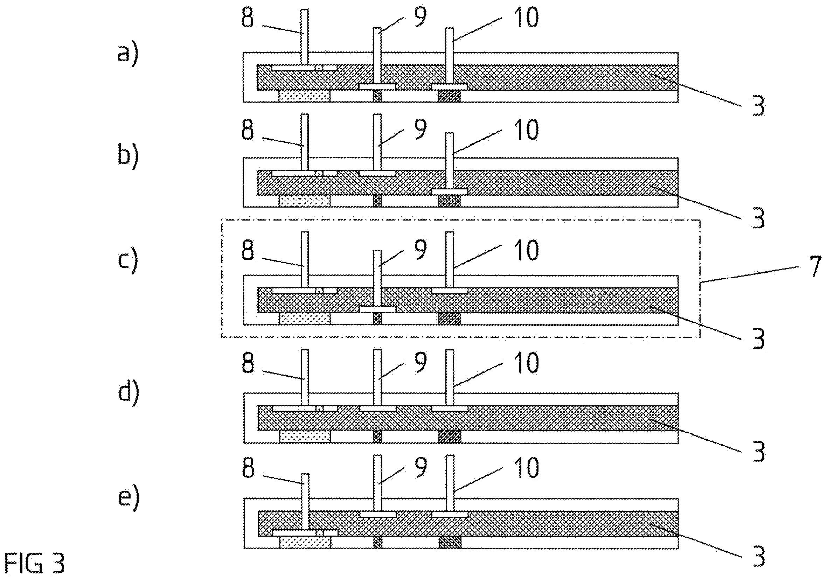

In Fig. 3 sind verschiedene Schaltzustände der Stufungsventileinrichtung 7 zur Einstellung des Verhältnisses zwischen der der Piloteinspritzdüse 5 und der der Haupteinspritzdüse 6 zugeführten Brennstoffmenge wiedergegeben. Im Folgenden wird angenommen, dass ein definierter Brennstoffstrom durch die Einzelbrennstotfleitung 3 zu der Stufungsventileinrichtung 7 strömt und sich daher der Druck in der Leitung abhängig vom Schaltzustand der Sperrventile verändert. Bei geschlossenen ersten und zweiten Hauptventilen 9, 10 (Fig. 3a) und einem in der oberen Endlage befindlichen Pilotventil 8 gelangt ein maximal möglicher Brennstoffstrom zur Piloteinspritzdüse 5 des Brenners 4 und kein Brennstoff zur Haupteinspritzdüse 6. Gemäß Fig. 3b befindet sich nur das zweite Hauptventil 10 in der unteren Endlage, so dass ein gegenüber dem vorherigen Schaltzustand verminderter Brennstoffstrom zur Piloteinspritzdüse 5 und über den kleineren Querschnitt $A_2$ ein begrenzter Brennstoffstrom zur Haupteinspritzdüse 6 gelangt. In dem Schaltzustand nach Fig. 3c, in dem sich nur das erste Hauptventil 9 in der Schließstellung befindet, strömt eine noch größere Brennstoffmenge zur Haupteinspritzdüse 6, und gleichzeitig wird damit der Brennstoffstrom zur Piloteinspritzdüse 5 weiter verringert. Gemäß dem in Fig. 3d gezeigten Schaltzustand sind die drei Stufungsventile (Sperrventile 8, 9, 10) in der oberen Endlage (Offenstellung), so dass das zur Haupteinspritzdüse. 6 strömende Brennstoffvolumen weiter vergrößert und der Brennstoffstrom zur Piloteinspritzdüse 5 weiter verringert wird. Im Schaltzustand nach. Fig. 3e ist nur das Pilotventil 8 in der unteren Endlage, so dass über den kleinen Querschnitt $A_0$ nur ein sehr kleiner Brennstoffstrom zur Piloteinspritzdüse 5 gelangt, während die Haupteinspritzdüse 6 mit einer maximalen Brennstoffmenge versorgt wird.

Mit der zuvor beschriebenen, einer Einzelbrennstoffleitung 3 mit vorgeschalteter Brennstoffdosiereinheit 2 zugeordneten Stufungsventileinrichtung 7 für den jeweiligen Brenner 4 können mit jeweils nur zwei schaltstellungen (obere/untere Endlage) der einzelnen Stufungsventile (Sperrventile) unterschiedliche. Verhältnisse zwischen der der Piloteinspritzdüse 5 und der der Haupteinspritzdüse 6 zugeführten Brennstoffmenge eingestellt werden. Die Stufungsventileinrichtung 7 verfügt aufgrund der nur zwei Schaltstellungen der Sperrventile, über eine sehr gute Nullpunktstabilität und kann infolge der hier einsetzbaren - einfach ausgebildeten und einzeln elektrisch betätigbaren - Sperrventile mit geringem Aufwand erstellt und wartungsarm und verschleißarm, das heißt mit langer Lebensdauer, betrieben werden. Die in kürzester Zeit schnell und dicht schließenden Sperrventile bewirken zudem eine Verkürzung der Abschaltzeit bei Wellenbruch. Da die Sperrventile im heißen Bereich des Gasturbinentriebwerks angeordnet sind, ist eine Wärmeabfuhr erforderlich, die jedoch durch Umspülen der Ventile mit dem Brennstoff erreicht werden kann. Da im heißen Triebwerksbereich nur eine (einzelne) ständig von Brennstoff durchströmte Einzelbrennstoffleitung vorgesehen ist, ist ein Zusetzen dieser Brennstoffleitung infolge Verkokung nicht zu befürchten.

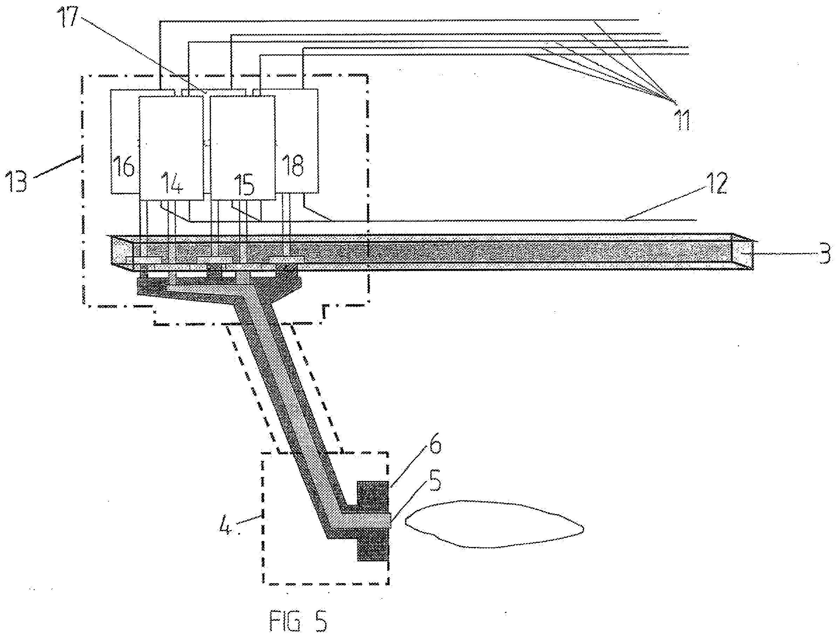

Gemäß einer zweiten, in Fig. 4 und 5 gezeigten Ausführungsvariante kann die Brennstoffzufuhr zum gestuften Brenner 4, das heißt zur Piloteinspritzdüse 5 und zur Haupteinspritzdüse 6, unter Verwendung einer jedem Brenner 4 zugeordneten und in eine Einzelbrennstoffleitung 3 eingebundenen Binärverteilungsventileinrichtung 13 gelöst werden, die auch die bei der zuvor geschilderten Stufungsventileinrichtung 7 erwähnten, einfach ausgebildeten und steuerbaren, verschleiß- und wartungsarmen elektrischen Pilot- und Hauptventile (Sperrventile) zur Einstellung der Größe des der Piloteinspritzdüse 5 und der Haupteinspritzdüse 6 zuzuführenden Brennstoffstroms aufweist. Die Binärverteilungsventileinrichtung 13 umfasst in der in Fig. 5 beispielhaft wiedergegebenen Ausführungsform ein binäres erstes und zweites Pilotventil 14, 15, die zwei unterschiedliche Querschnitte $A_4$ und $A_5$ zur Piloteinspritzdüse 5 freigeben oder verschließen und so eine unterschiedliche - binär codierte - Brennstoffzufuhr, und zwar entsprechend den Querschnitten Null oder $A_4$ oder $A_5$ oder $A_4$ plus $A_5$, zur Piloteinspritzdüse 5 ermöglichen. Für die Brennstoffzufuhr zur Haupteinspritzdüse 6 des gestuften Brenners 4 sind binäre erste bis dritte Hauptventile 16, 17 und 18 vorgesehen, die drei unterschiedlich große Querschnitte $A_6$, $A_7$ und $A_8$ freigeben bzw. verschließen. Die Querschnitte $A_7$ und $A_8$ sind zweimal bzw. viermal so groß wie der Querschnitt $A_6$, so dass entsprechend der Schaltstellung der Hauptventile 16 bis 18 eine binär codierte Brennstoffzumessung zur Haupteinspritzdüse 6 möglich ist.

Gegebenenfalls kann - gewichts- und kostenmindernd - auf die Anordnung der Brennstoffdosiereinheit 2 verzichtet werden, und zwar wenn - anders als im vorhergehenden Ausführungsbeispiel - eine größere Anzahl n von binären Haupt- und/oder Pilotventilen vorgesehen ist. Ausgehend von der kleinsten Querschnittsfläche $A_0 = A_{min}$, ergibt sich dann die Größe der anderen Querschnittsflächen aus

$$A_n = 2^n \cdot A_{min}.$$

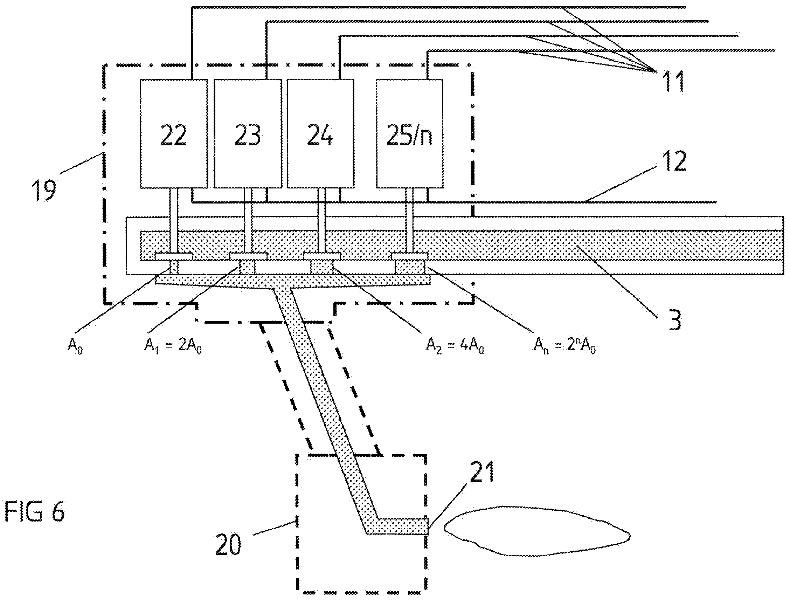

Fig. 6 zeigt noch eine entsprechende Binärdosierventileinrichtung 19 mit n Binärventilen 22, 23, 24, 25 usw. für einen ungestuften Brenner 20 mit nur einer Einspritzdüse 21, Eine mit einer ausreichend großen Anzahl von Binärventilen ausgebildete Binärdosierventileinrichtung 19 übernimmt die Funktion der in den oben erläuterten Ausführungsformen noch erforderlichen Brennstoffdosiereinheit 2.

## Bezugszeichenliste

1     Hochdruckzufuhrleitung
2     Brennstoffdosiereinheit

3     Einzelbrennstoffleitung
4     gestufter Brenner
5     Piloteinspritzdüse
6     Haupteinspritzdüse
7     Stufungsventileinrichtung
8     Pilotventil (Querschnitt $A_0$, $A_1$)
9     erstes Hauptventil (Querschnitt $A_2$)
10    zweites Hauptventil (Querschnitt $A_3$)
11    signalleitungen
12    Rückleitung
13    Binärverteilungsventileinrichtung, gestuft
14    erstes binäres Pilotventil (Querschnitt $A_4$)
15    zweites binäres Pilotventil (Querschnitt $A_5$)
16    erstes binäres Hauptventil (Querschnitt $A_6$)
17    zweites binäres Hauptventil (Querschnitt $A_7$)
18    drittes binäres Hauptventil (Querschnitt $A_8$)
19    Binärdosierventileinrichtung, ungestuft
20    ungestufter Brenner
21    Einspritzdüse v. 20
22    Binärventil
23    Binärventil
24    Binärventil
25    Binärventil

**Patentansprüche**

1. Brennstoffzufuhrsystem für ein Gasturbinentriebwerk mit einer Hochdruckzufuhrleitung (1), einer Brennstoffdosiereinheit (2) und einem mit den Brennern (4, 20) verbundenen Brennstoffverteilersystem zur Steuerung oder Regelung der den einzelnen Brennern zugeführten Brennstoffmenge, **dadurch gekennzeichnet, dass** das Brennstoffverteilersystem eine im Betrieb ständig von Brennstoff durchströmte Einzelbrennstoffleitung (3) sowie eine der Einzelbrennstoffleitung (3) zugeordnete Stufungsventileinrichtung (7,13,19) für den jeweiligen Brenner (4,20) bestehend mehreren unabhängig voneinander, wahlweise einzeln oder gleichzeitig in eine offene oder geschlossene Endlage elektrisch verstellbaren Sperrventilen (8 bis 10; 14 bis 18; 22 bis 25) mit bestimmten, aber unterschiedlichen Querschnitten ($A_0$ bis $A_n$) umfasst, wobei die vorgesehene Stufungsventileinrichtung (7, 13) zur regelbaren Brennstoffaufteilung als Sperrventile mindestens ein Pilotventil (8; 14, 15) oder mindestens ein Hauptventil (9, 10; 16 bis 18) mit jeweils unterschiedlichem Querschnitt ($A_0$ bis $A_n$), die den Brennstoffstrom zur Piloteinspritzdüse (5) oder zur Haupteinspritzdüse (6) sperren oder freigeben, umfasst, und wobei die Stufungsventileinrichtung (7) ein Pilotventil (8) aufweist, das einen Querschnitt ($A_0$) sperrt oder freigibt und im Sperrzustand noch einen kleinen Querschnitt ($A_1 \ll A_0$) zur Piloteinspritzdüse (5) freilässt, sowie ein erstes und ein zweites Hauptventil (9, 10) mit jeweils unterschiedlichem Querschnitt ($A_2$, $A_3$) umfasst, wobei in der vollständig oder begrenzt geschlossenen Lage der Hauptventile (9, 10) und des Pilotventils (8) variierbare Brennstoffströme zur Piloteinspritzdüse (5) und in der Schließ- und/oder Offenstellung eines aus oder beider Hauptventile (9, 10) unterschiedliche Brennstoffströme zur Haupteinspritzdüse (6) gelangen.

2. Brennstoffzufuhrsystem nach Anspruch 1, **gekennzeichnet durch** eine Binärverteilungsventileinrichtung (13), die mindestens zwei im Querschnitt ($A_4$, $A_5 = 2A_4$) binär dimensionierte Pilotventile (14, 15) und/oder mindestens zwei im Querschnitt ($A_6$, $A_7 = 2A_6$, $A_8 = 4A_6$) binär dimensionierte Hauptventile (16, 17, 18) umfasst, wobei binär dimensioniert hierbei bedeutet, dass das Verhältnis der Ventilquerschnitte von Haupt- bzw. Pilotventilen auf der Basis 2 beruht, und eine binär codierte Brennstoffverteilung sowie bei einer Vielzahl von binären Pilot- und Hauptventilen unter Fortfall der Brennstoffdosiereinheit (2) eine binäre Brennstoffdosierung zur Pilot- und zur Haupteinspritzdüse (5, 6) zulässt.

3. Brennstoffzufuhrsystem nach einem der vorhergehenden Ansprüche, **dadurch gekennzeichnet, dass** die elektrisch betätigten Sperrventile (8 bis 10; 14 bis 18; 22 bis 25...) jeweils einzeln oder in Gruppen an Signalleitungen (11) sowie gemeinsam oder in Gruppen an eine oder mehrere, auch als alternative Signalleitung nutzbare Rückleitung (12) angeschlossen sind.

4. Brennstoffzufuhrsystem nach Anspruch 3, **dadurch gekennzeichnet, dass** die Sperrventile als Magnetventile oder piezoelektrische Ventile ausgebildet sind.

5. Brennstoffzufuhrsystem nach Anspruch 3 oder 4, **dadurch gekennzeichnet, dass** die Sperrventile zur Kühlung von dem Brennstoffstrom beaufschlagt sind.

6. Brennstoffzufuhrsystem nach Anspruch 5, **dadurch gekennzeichnet, dass** die Sperrventile in die Einzelbrennstoffleitung (3) eingebunden sind.

7. Brennstoffzufuhrsystem nach Anspruch 1, **dadurch gekennzeichnet, dass** die Ventileinrichtungen (7, 13, 19) oder Gruppen von Ventileinrichtungen unabhängig voneinander ansteuerbar sind.

8. Brennstoffzufuhrsystem nach Anspruch 4, **dadurch gekennzeichnet, dass** die einzelnen Ventile der Ventileinrichtung (19) durch pulsweitenmodulierte Ansteuerung betätigt werden, so dass der Brennstoff anhand der Einschaltdauer und der Pulsweite zugemessen werden kann.

9. Brennstoffzufuhrsystem nach Anspruch 1, **dadurch**

**gekennzeichnet, dass** einzelne Sperrventile zwei definierte Endlagen und eine Mittellage haben.

10. Brennstoffzufuhrsystem nach einem der vorhergehenden Ansprüche, **dadurch gekennzeichnet, dass** die Sperrventile (8 bis 10; 14 bis 18; 22 bis 25) so ausgebildet sind, dass im stromlosen Fall (Fehlerfall) entweder die letzte Ventilstellung beibehalten wird, oder das Ventil eine definierte Stellung einnimmt.

**Claims**

1. Fuel supply system for a gas-turbine engine with a high-pressure supply line (1), a fuel metering unit (2) and a fuel distribution system connected to the burners (4, 20), to control or regulate the fuel quantity supplied to the individual burners, **characterized in that** the fuel distribution system includes a single fuel line (3), through which fuel permanently flows in operation, as well as a staging valve arrangement (7, 13, 19) for the respective burner (4, 20), said staging valve arrangement being assigned to the single fuel line (3) and comprising several shutoff valves (8 to 10, 14 to 18, 22 to 25) which are - independently of each other - individually or simultaneously electrically settable to a closed or open limit position, with the shutoff valves featuring specific, yet different cross-sectional areas ($A_o$ to $A_n$), wherein the staging valve arrangement (7, 13) provided includes for controllable fuel distribution, as shutoff valves at least one pilot valve (8, 14, 15) or at least one main valve (9, 10, 16 to 18), each having a different cross-sectional area ($A_o$ to $A_n$), which close or release the fuel flow to the pilot injection nozzle (5) or to the main injection nozzle (6), and wherein the staging valve arrangement (7) features a pilot valve (8), which closes or releases a cross-sectional area ($A_o$), while leaving open a small cross-section ($A_1 << A_0$) to the pilot injection nozzle (5) in the closed state, as well as a first and a second main valve (9, 10), each having a different cross-sectional area ($A_2$, $A_3$), with variable fuel flows reaching the pilot injection nozzle (5) in the completely or partly closed position of the main valves (9, 10) and of the pilot valve (8), and with different fuel flows reaching the main injection nozzle (6) in the closed and/ or open position of one or both of the main valves (9, 10).

2. Fuel supply system in accordance with Claim 1, **characterized by** a binary distribution valve arrangement (13) which includes at least two cross-sectionally ($A_4$, $A_5 = 2A_4$) binary-dimensioned pilot valves (14, 15) and/ or at least two cross-sectionally ($A_6$, $A_7 = 2A_6$, $A_8 = 4A_6$) binary-dimensioned main valves (16, 17, 18). In this context "binary-dimensioned" means that the ratio of the cross-sections of main valves or pilot valves, respectively, is based on 2 and allows a binary-coded fuel distribution as well as - with a plurality of binary pilot and main valves being provided and the fuel metering unit (2) being omitted - a binary fuel metering to the pilot and to the main injection nozzle (5, 6).

3. Fuel supply system in accordance with one of the preceding Claims, **characterized in that** the electrically actuated shutoff valves (8 to 10, 14 to 18, 22 to 25...) are each connected to signal lines (11), individually or in groups, and, collectively or in groups, to one or several return lines (12), which can also be used as alternative signal lines.

4. Fuel supply system in accordance with Claim 3, **characterized in that** the shutoff valves are designed as solenoid valves or piezo-electrical valves.

5. Fuel supply system in accordance with Claim 3 or 4, **characterized in that** the shutoff valves are supplied with fuel for cooling purposes.

6. Fuel supply system in accordance with Claim 5, **characterized in that** the shutoff valves are incorporated into the single fuel line (3).

7. Fuel supply system in accordance with Claim 1, **characterized in that** the valve arrangements (7, 13, 19) or groups of valve arrangements can be actuated independently of each other.

8. Fuel supply system in accordance with Claim 4, **characterized in that** the individual valves of the valve arrangement (19) are actuated by pulse-width modulation, enabling the fuel to be metered on the basis of actuation time and impulse width.

9. Fuel supply system in accordance with Claim 1, **characterized in that** individual shutoff valves have two defined limit positions and one center position.

10. Fuel supply system in accordance with one of the preceding Claims, **characterized in that** the shutoff valves (8 to 10, 14 to 18, 22 to 25) are designed such, that in the de-energized state (failure case) either the last valve position is retained or the valve assumes a defined position.

**Revendications**

1. Système d'alimentation en carburant pour un moteur à turbine à gaz avec une conduite d'alimentation haute pression (1), une unité de dosage de carburant (2) et un système de distribution de carburant relié aux brûleurs (4, 20) pour contrôler ou réguler la quantité de carburant amenée aux différents brûleurs, **ca-**

**ractérisé en ce que** le système de distribution de carburant comprend une conduite de carburant unique (3) traversée en permanence pendant le fonctionnement par du carburant ainsi qu'un dispositif d'étagement de vannes (7, 13, 19) pour le brûleur respectif (4, 20), attribué à la conduite de carburant unique (3) et composé de plusieurs vannes d'arrêt (8 à 10, 14 à 18, 22 à 25) réglables électriquement, indépendamment les unes des autres, au choix individuellement ou simultanément dans une position de fin de course ouverte ou fermée, avec des sections données mais différentes ($A_0$ à $A_n$), sachant que le dispositif d'étagement de vannes prévu (7, 13) comprend comme vannes d'arrêt pour la distribution contrôlable du carburant au moins une vanne pilote (8, 14, 15) ou au moins une vanne principale (9, 10, 16 à 18) de section respective différente ($A_0$ à $A_n$) qui bloquent ou laissent passer le flux de carburant vers l'injecteur pilote (5) ou vers l'injecteur principal (6), et sachant que le dispositif d'étagement de vannes (7) présente une vanne pilote (8) qui bloque ou libère une section ($A_0$) et libère à l'état bloqué encore une petite section ($A_1 \ll A_0$) vers l'injecteur pilote (5), ainsi qu'une première et une seconde vanne principale (9, 10) de section respective différente ($A_2$, $A_3$), sachant que dans la position complètement ou partiellement fermée des vannes principales (9, 10) et de la vanne pilote (8), des flux de carburant variables parviennent à l'injecteur pilote (5) et que, dans la position fermée et/ ou ouverte d'une ou des deux vannes principales (9, 10), de différents flux de carburant parviennent à l'injecteur principal (6).

2. Système d'alimentation en carburant selon la revendication n°1, **caractérisé par** un dispositif de distribution binaire à vannes (13) qui comprend au moins deux vannes pilotes (14, 15) dimensionnées binairement en section ($A_4$, $A_5 = 2A_4$) et/ ou au moins deux vannes principales (16, 17, 18) dimensionnées binairement en section ($A_6$, $A_7 = 2A_6$, $A_8 = 4A_6$), sachant que « dimensionné binairement » signifie ici que le rapport des sections des vannes principales ou pilotes est en base 2 et admet une distribution du carburant codée binairement ainsi qu'un dosage binaire du carburant vers l'injecteur pilote et l'injecteur principal (5, 6), pour une pluralité de vannes pilotes et de vannes principales binaires en cas de suppression de l'unité de dosage de carburant (2).

3. Système d'alimentation en carburant selon une des revendications précédentes, **caractérisé en ce que** les vannes d'arrêt (8 à 10, 14 à 18, 22 à 25...) actionnées électriquement sont raccordés respectivement, individuellement ou en groupes, à des lignes de signalisation (11) ainsi qu'ensemble ou en groupes à une ou plusieurs lignes de retour (12) utilisables également comme lignes de signalisation alternatives.

4. Système d'alimentation en carburant selon la revendication n° 3, **caractérisé en ce que** les vannes d'arrêt sont conçues sous forme d'électrovannes ou de vannes piézoélectriques.

5. Système d'alimentation en carburant selon la revendication n° 3 ou n° 4, **caractérisé en ce que** les vannes d'arrêt pour le refroidissement sont alimentés en carburant.

6. Système d'alimentation en carburant selon la revendication n° 5, **caractérisé en ce que** les vannes d'arrêt sont incorporées dans la conduite de carburant unique (3).

7. Système d'alimentation en carburant selon la revendication n°1, **caractérisé en ce que** les dispositifs à vannes (7, 13, 19) ou des groupes de dispositifs à vannes peuvent être actionnés indépendamment les uns des autres.

8. Système d'alimentation en carburant selon la revendication n° 4, **caractérisé en ce que** les différentes vannes du dispositif à vannes (19) sont actionnées par une modulation de largeur d'impulsions de telle sorte que le carburant peut être dosé sur la base de la durée d'activation et de la largeur d'impulsion.

9. Système d'alimentation en carburant selon la revendication n°1, **caractérisé en ce que** des vannes d'arrêt individuelles possèdent deux positions de fin de course définies et une position médiane.

10. Système d'alimentation en carburant selon une des revendications précédentes, **caractérisé en ce que** les vannes d'arrêt (8 à 10, 14 à 18, 22 à 25) sont conçues de manière à ce qu'en cas d'absence de courant (cas de défaut), soit la dernière position de vanne est conservée soit la vanne se place dans une position définie.

FIG 1

Hochdruck Brennstoff

Zugemessener Brennstoff

FIG 4

Hochdruck Brennstoff

FIG 2

FIG 3

a)

b)

c)

d)

e)

FIG 5

$A_n = 2^n A_0$

$A_2 = 4 A_0$

$A_1 = 2 A_0$

$A_0$

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7137242 B2
- US 6813876 B2
- US 7036302 B2
- US 7007476 B2